# EUROPEAN PATENT SPECIFICATION

(11) **EP 2 824 201 B1**
(45) Date of publication and mention of the grant of the patent: **16.05.2018**
(21) Application number: 13758628.5
(22) Date of filing: 04.03.2013
(51) Int. Cl.: C22B 7/00, C22B 11/00

(54) **METHOD FOR RECOVERING RUTHENIUM FROM WASTE CATALYST OF ALUMINUM OXIDE LOADED WITH RUTHENIUM**
VERFAHREN ZUR RÜCKGEWINNUNG VON RUTHENIUM AUS ABFALLKATALYSATOR VON MIT RUTHENIUM GELADENEN ALUMINIUMOXID
PROCÉDÉ DE RÉCUPÉRATION DE RUTHÉNIUM À PARTIR D'UN CATALYSEUR USAGÉ D'OXYDE D'ALUMINIUM CHARGÉ DE RUTHÉNIUM

(30) Priority: 05.03.2012 CN 201210055806
(43) Date of publication of application: 14.01.2015
(73) Proprietor: Wuhan Kaidi Engineering Technology Research Institute Co., Ltd., Wuhan, Hubei 430223 (CN)
(72) Inventor: LAI, Bo, Wuhan Hubei 430212 (CN); XU, Li, Wuhan Hubei 430212 (CN); HAN, Yiming, Wuhan Hubei 430212 (CN); LIU, Qianqian, Wuhan Hubei 430212 (CN); SONG, Dechen, Wuhan Hubei 430212 (CN)
(74) Representative: Zeuner Summerer Stütz
(86) International application number: PCT/CN2013/072114
(87) International publication number: WO 2013/131453

(56) References cited:
- WO-A2-2010/076297
- CN-A- 101 331 240
- CN-A- 101 797 649
- CN-A- 102 108 444
- CN-A- 102 560 128
- US-A1- 2008 293 836

## Description

### FIELD OF THE INVENTION

The invention relates to the technical field of recovering noble metal from waste catalyst, in particular to a method for recovering ruthenium from waste catalyst of aluminum oxide loaded with ruthenium.

### BACKGROUND OF THE INVENTION

Ruthenium is a very expensive rare metal, has excellent catalytic performance, has widespread application in the catalyst industry, and is mostly used in synthesizing ammonia, preparing cyclohexene through selective hydrogenation of benzene, and manufacturing fuel cells. The annual output of ruthenium in the world is only dozens of tons; while the annual output of ruthenium in China is only several kilograms, which is less than 1% of the total demand. Therefore, most of the ruthenium used for manufacturing catalyst in China depends on importation, resulting in a very high cost of the ruthenium catalyst. In addition, the purity of the ruthenium in the natural minerals in China is only 0.028 g/t; while the purity of the ruthenium in the catalyst is generally not less than 500 g/t, which is much higher than the purity of the ruthenium in the natural minerals. Also, the composition in the waste catalyst is much simpler than those in the natural minerals. As such, recovering ruthenium from waste catalyst is capable of implementing the cyclic utilization of the ruthenium resources, is of great importance to resources saving and environment protection, and is of great economic value.

One known method of recovering ruthenium from supported catalyst is to utilize the method of "alkali fusion - oxidizing distillation" to obtain β-RuCl₃·xH₂O crystals. The Chinese Patent Application No. 200610052073.0 discloses a recovering method from ruthenium catalyst carried on activated carbon, including the steps of: calcining a ruthenium catalyst carried on activated carbon without alkali metal or alkaline-earth metallic promoter at 600-1000°C for 2-20 hours to obtain an grey black compound; mixing the grey black compound with KOH and KNO₃, heating them at 300-950°C for 1-5 hours, and cooling them to obtain an alkali fusion product; dissolving the alkali fusion product in water of 50-90°C to obtain a K₂RuO₄ solution; introducing NaClO and concentrated H₂SO₄ into the K₂RuO₄ solution and distilling the K₂RuO₄ solution at 50-90°C for 2-4 hours to obtain RuO₄ gas; and using strong acid to absorb the RuO₄ gas and normal pressure distilling or reduced pressure distilling the concentrated acid to obtain ruthenium salt. The method is complicated to operate, has high energy consumption and low product recovery rate, and has long recycle period.

In addition, the Chinese Patent Application No. 200610106338.0 discloses a method of preparing ruthenium powder of high quality from solutions containing ruthenium. The method discloses a step of calcining (NH₄)₃RuCl₆ to prepare ruthenium powder, the step including first calcining (NH₄)₃RuCl₆ at 500-800°C to obtain rough ruthenium powder, then smashing the rough ruthenium powder, and finally calcining the rough ruthenium powder again at 800-1000°C to obtain ruthenium powder having chlorine in 100 PPM or less. This method uses ammonium chloride to directly precipitate Ru(III) in hydrochloric acid containing ruthenium and to produce (NH₄)₃RuCl₆, calcinates the (NH₄)₃RuCl₆, and uses hydrogen to reduce the (NH4)₃RuCl₆ for obtaining ruthenium. This method is capable of producing high quality ruthenium powder. However, because the (NH₄)₃RuCl₆ produced by precipitating Ru(III) has high water solublity, the precipitation of the ruthenium in the solution is not complete, and the recovery rate is very low. Document US 2008/0293836 A1 discloses a process for recovering ruthenium from a used ruthenium-comprising catalyst.

### SUMMARY OF THE INVENTION

In view of the above-described problems, it is one objective of the invention to provide a method for recovering ruthenium from waste catalyst of aluminum oxide loaded with ruthenium, which is simple to operate, has a low cost, has a short recovery period, and has a high recovery rate.

To achieve the above objective, in accordance with one embodiment of the invention, there is provided a method for recovering ruthenium from waste catalyst of aluminum oxide loaded with ruthenium, the method comprising:
1) drying waste catalyst of aluminum oxide loaded with ruthenium at 100-150°C in a nitrogen atmosphere for 1-2 hours, calcining the waste catalyst of aluminum oxide loaded with ruthenium at 300-500°C for 2-4 hours, cooling the waste catalyst of aluminum oxide loaded with ruthenium to room temperature, and grinding the waste catalyst of aluminum oxide loaded with ruthenium into black powder comprising ruthenium oxide;
2) placing the black powder inside a fluidized bed reactor, purging the fluidized bed reactor with nitrogen for 20-40 minutes and then purging the fluidized bed reactor with hydrogen , and reducing the black powder to obtain a powder comprising ruthenium at a temperature of 200-400°C at a pressure of 1-2 MPa for 2-3 hours;
3) purging the fluidized bed reactor with nitrogen for 20-40 minutes, and then introducing a mixed gas of oxygen and ozone to oxidize the powder comprising ruthenium for obtaining RuO₄ gas at a temperature of 500-750°C at a pressure of 1-2 MPa for 1-8 hours;
4) introducing the RuO₄ gas into a 3-8 mol/L hydrochloric solution, and completely dissolving the RuO₄ gas to obtain an H₃RuCl₆ solution;
5) introducing excess oxidant into the H₃RuCl₆ solution, stirring the H₃RuCl₆ solution for 0.5-1.5 hours to completely oxidize the H₃RuCl₆ solution to generate H₂RuCl₆, introducing excess NH₄Cl into the H₂RuCl₆ solution, heating the H₂RuCl₆ solution to 60-90°C, stirring the H₂RuCl₆ solution for 1-3 hours, filtering the H₂RuCl₆ solution to obtain a filter cake, and washing the filter cake to obtain an (NH₄)₂RuCl₆ solid, in which the oxidant is soluble chlorate; and
6) reducing the (NH₄)₂RuCl₆ solid at a temperature of 450-800°C using a mixed gas of hydrogen and nitrogen to obtain ruthenium, in which a volume fraction of the hydrogen in the mixed gas is 1-15%.

In a class of this embodiment, in step 3) the space rate of the mixed gas of oxygen and ozone is 1000-4000 h⁻¹.

In a class of this embodiment, in step 3), the volume fraction of the ozone in the mixed gas of oxygen and ozone is 1-20%.

In a class of this embodiment, in step 4) the concentration of the hydrochloric solution is 6 mol/L.

In a class of this embodiment, in step 5) the weight of the NH₄Cl is 1.2-2.5 times of the theoretical weight of the NH₄Cl that is required to completely react with the H₂RuCl₆ solution.

In a class of this embodiment, in step 5) the oxidant is one or more of the following: ammonium chlorate, potassium chlorate, sodium chlorate, and magnesium chlorate.

In a class of this embodiment, in step 5) the filter cake is washed by an ethanol solution.

In a class of this embodiment, in step 5) the H₂RuCl₆ solution is stirred at 100-400 r/min for 1-3 hours. Furthermore, it is preferred that the H₂RuCl₆ solution is stirred at 200 r/min for 1.5-2.5 hours.

The function and principle of the technological parameters in each step of the method for recovering ruthenium from waste catalyst of aluminum oxide loaded with ruthenium are as follows:

Step 1) utilizes a nitrogen atmosphere to dry and calcinate at high temperatures, which can effectively remove water and the residual organic substance in the waste catalyst. The obtained product mainly contains ruthenium oxide.

Step 2) reduces the ruthenium oxide in the waste catalyst into free state ruthenium, the reaction process being:

RuO₂+2H₂=Ru+2H₂O.

The reaction processes of step 3) are:

Ru+2O₂=RuO₄↑, and 3Ru+4O₃=3RuO₄↑,

and air or pure oxygen can be used in the mixed gas.

In step 4), the RuO₄ gas is introduced into sufficient 3-8 mol/L hydrochloric solution, and the RuO₄ gas is completely absorbed and is reduced into an H₃RuCl₆ solution, the reaction process being:

2RuO₄+22HCl=2H₃RuCl₆+8H₂O+5Cl₂↑

Step 5) uses oxidant to oxidize the H₃RuCl₆ solution into H₂RuCl₆, and then introduces excess ammonium chloride to obtain an (NH₄)₂RuCl₆ precipitate, the reaction processes being:

6RuCl₆³⁻ + ClO₃⁻ + 6H⁺ = 6RuCl₆²⁻ + Cl⁻ + 3H₂O,

and

RuCl₆²⁻ + 2NH₄⁺ = (NH₄)₂ RuCl₆↓.

In step 5), in order to completely precipitate the ruthenium, excess ammonium chloride should be introduced. Preferably, the weight of the NH₄Cl should be 1.2-2.5 times of the theoretical weight of the NH₄Cl that is required to completely react with the H₂RuCl₆ solution and to increase the recovery rate. However, when excess ammonium chloride is introduced, unreacted ammonium chloride would be crystalized. In order to completely precipitate the H₂RuCl₆ and to reduce the water content of the precipitate, the quantity of the introduced ammonium chloride should be controlled, and it is necessary to stir the H₂RuCl₆ solution at 100-400 r/min for 1-3 hours when introducing the ammonium chloride.

In step 6) the (NH₄)₂RuCl₆ solid is reduced by hydrogen at high temperatures to obtain metal ruthenium. By further treating the metal ruthenium, ruthenium powder for preparing target material can be produced.

Compared to the conventional "alkali fusion - oxidizing distillation" method, in the method of this invention, after obtaining H₃RuCl₆ solution which contains ruthenium in the recovering step, oxidant is introduced to completely oxidize the H₃RuCl₆ solution into H₂RuCl₆, and then excess ammonium chloride is introduced to obtain an (NH₄)₂RuCl₆ precipitate, which increases the precipitation rate of the ruthenium in the solution. In addition, the (NH₄)₂RuCl₆ precipitate can be directly used to obtain metal ruthenium by calcining reduction by hydrogen at high temperatures. The recovering process of this method is simple to operate, has low reaction energy consumption, implements an efficient recycle of the ruthenium in waste catalyst of aluminum oxide loaded with ruthenium, increases the economic benefits, and is advantageous for the recycle utilization of the ruthenium.

### DETAILED DESCRIPTION OF THE EMBODIMENTS

For further illustrating the invention of a method for recovering ruthenium from waste catalyst of aluminum oxide loaded with ruthenium, detailed embodiments are described below. It should be noted that the following examples are intended to describe and not to limit the invention.

### Example 1

A method for recovering ruthenium from waste catalyst of aluminum oxide loaded with ruthenium, the method comprising:
1) weighing 90 g of waste catalyst of aluminum oxide loaded with ruthenium (in which the weight percentage of the ruthenium is 5.0%) and putting the waste catalyst into a crucible, placing the crucible inside a muffle, purging the muffle with nitrogen, drying waste catalyst of aluminum oxide loaded with ruthenium loaded with ruthenium at 100-150°C in a nitrogen atmosphere for 1-2 hours, calcining the waste catalyst of aluminum oxide loaded with ruthenium at 300-500°C for 2-4 hours for removing the residual organic substance in the waste catalyst, cooling to room temperature to obtain 81.2 g black solid, and grinding the black solid into black solid powder;
2) placing 60 g of the obtained black powder inside a fluidized bed reactor, purging the fluidized bed reactor with nitrogen for 30 minutes and then purging the fluidized bed reactor with hydrogen , and reducing the black powder to obtain a powder comprising metal ruthenium at a temperature of 300°C at a pressure of 1.0 MPa for 2 hours;
3) purging the fluidized bed reactor with nitrogen for 20 minutes, and then introducing a mixed gas of oxygen and ozone to oxidize the powder comprising ruthenium for obtaining RuO₄ gas at a temperature of 600-650°C at a pressure of 1 MPa for 4 hours, in which the space rate of the mixed gas of oxygen and ozone is 1200 h⁻¹ and the volume fraction of the ozone in the mixed gas of oxygen and ozone is 20%;
4) introducing the RuO₄ gas into 6 mol/L hydrochloric solution, and completely absorbing the RuO₄ gas to obtain an H₃RuCl₆ solution;
5) slowly introducing 0.63 g (which is 1.2 times of the theoretical weight 0.525 g that is required for complete reaction) oxidant NaClO₃ powder into the H₃RuCl₆ solution, stirring the H₃RuCl₆ solution for 0.5 hour to completely oxidize the H₃RuCl₆ solution to generate H₂RuCl₆, introducing 3.81 g NH₄Cl (which is 1.2 times of the theoretical weight 3.18 g of the NH₄Cl that is required for complete reaction) into the H₂RuCl₆ solution, heating the H₂RuCl₆ solution to 90°C, stirring the H₂RuCl₆ solution for 1.5 hours at 200 r/min to obtain a (NH₄)₂RuCl₆ precipitate, filtering the H₂RuCl₆ solution to obtain a filter cake, washing the filter cake by an ethanol solution to remove the impurities and the muriatic acid on the filter cake, and drying the filter cake to obtain an (NH₄)₂RuCl₆ solid; and
6) reducing the (NH₄)₂RuCl₆ solid at a temperature of 650°C using a mixed gas of hydrogen and nitrogen to obtain metal ruthenium, the volume fraction of the hydrogen in the mixed gas being 5%, the weight of the metal ruthenium being measured to be 2.941 g.

In this embodiment, the recovering rate of the ruthenium is 98.03%.

### Example 2

A method for recovering ruthenium from waste catalyst of aluminum oxide loaded with ruthenium, the method comprising:
1) weighing 90 g of waste catalyst of aluminum oxide loaded with ruthenium (in which the weight percentage of the ruthenium is 5.0%) and putting the waste catalyst into a crucible, placing the crucible inside a muffle, purging the muffle with nitrogen, drying waste catalyst of aluminum oxide loaded with ruthenium loaded with ruthenium at 100-150°C in a nitrogen atmosphere for 1-2 hours, calcining the waste catalyst of aluminum oxide loaded with ruthenium at 300-500°C for 2-4 hours for removing the residual organic substance in the waste catalyst, cooling to room temperature to obtain 81.2 g black solid, and grinding the black solid into black solid powder;
2) placing 60 g of the obtained black powder inside a fluidized bed reactor, purging the fluidized bed reactor with nitrogen for 20 minutes and then purging the fluidized bed reactor with hydrogen , and reducing the black powder to obtain a powder comprising metal ruthenium at a temperature of 200°C at a pressure of 1.5 MPa for 3 hours;
3) purging the fluidized bed reactor with nitrogen for 30 minutes, and then introducing a mixed gas of oxygen and ozone to oxidize the powder comprising ruthenium for obtaining RuO₄ gas at a temperature of 600°C at a pressure of 1.5 MPa for 4 hours, in which the space rate of the mixed gas of oxygen and ozone is 3000 h⁻¹ and the volume fraction of the ozone in the mixed gas of oxygen and ozone is 10%;
4) introducing the RuO₄ gas into 3 mol/L hydrochloric solution, and completely dissolving the RuO₄ gas to obtain an H₃RuCl₆ solution;
5) slowly introducing 0.72 g (which is 1.2 times of the theoretical weight that is required for complete reaction) oxidant KClO₃ powder into the H₃RuCl₆ solution, stirring the H₃RuCl₆ solution for 1 hour to completely oxidize the H₃RuCl₆ solution to generate H₂RuCl₆, introducing 4.77 g NH₄Cl (which is 1.5 times of the theoretical weight of the NH₄Cl that is required for complete reaction) into the H₂RuCl₆ solution, heating the H₂RuCl₆ solution to 80°C, stirring the H₂RuCl₆ solution for 1.5 hours at 200 r/min to obtain a (NH₄)₂RuCl₆ precipitate, filtering the H₂RuCl₆ solution to obtain a filter cake, washing the filter cake by an ethanol solution to remove the impurities and the muriatic acid on the filter cake, and drying the filter cake to obtain an (NH₄)₂RuCl₆ solid; and
6) reducing the (NH₄)₂RuCl₆ solid at a temperature of 800°C using a mixed gas of hydrogen and nitrogen to obtain metal ruthenium, the volume fraction of the hydrogen in the mixed gas being 10%, the weight of the metal ruthenium being measured to be 2.976 g.

In this embodiment, the recovering rate of the ruthenium is 99.2%.

### Example 3

A method for recovering ruthenium from waste catalyst of aluminum oxide loaded with ruthenium, the method comprising:
1) weighing 90 g of waste catalyst of aluminum oxide loaded with ruthenium (in which the weight percentage of the ruthenium is 5.0%) and putting the waste catalyst into a crucible, placing the crucible inside a muffle, purging the muffle with nitrogen, drying waste catalyst of aluminum oxide loaded with ruthenium loaded with ruthenium at 100-150°C in a nitrogen atmosphere for 1-2 hours, calcining the waste catalyst of aluminum oxide loaded with ruthenium at 300-500°C for 2-4 hours for removing the residual organic substance in the waste catalyst, cooling to room temperature to obtain 81.2 g black solid, and grinding the black solid into black solid powder;
2) placing 60 g of the obtained black powder inside a fluidized bed reactor, purging the fluidized bed reactor with nitrogen for 40 minutes and then purging the fluidized bed reactor with hydrogen , and reducing the black powder to obtain a powder comprising metal ruthenium at a temperature of 400°C at a pressure of 2.0 MPa for 2.5 hours;
3) purging the fluidized bed reactor with nitrogen for 40 minutes, and then introducing a mixed gas of oxygen and ozone to oxidize the powder comprising ruthenium for obtaining RuO₄ gas at a temperature of 650°C at a pressure of 2 MPa for 5 hours, in which the space rate of the mixed gas of oxygen and ozone is 4000 h⁻¹ and the volume fraction of the ozone in the mixed gas of oxygen and ozone is 15%;
4) introducing the RuO₄ gas into 5 mol/L hydrochloric solution, and completely dissolving the RuO₄ gas to obtain an H₃RuCl₆ solution;
5) slowly introducing 1.13 g (which is 1.2 times of the theoretical weight that is required for complete reaction) oxidant Mg(ClO₃)₂ powder into the H₃RuCl₆ solution, stirring the H₃RuCl₆ solution for 1.5 hours to completely oxidize the H₃RuCl₆ solution to generate H₂RuCl₆, introducing 6.36 g NH₄Cl (which is 2 times of the theoretical weight of the NH₄Cl that is required for complete reaction) into the H₂RuCl₆ solution, heating the H₂RuCl₆ solution to 90°C, stirring the H₂RuCl₆ solution for 2.5 hours at 100 r/min to obtain a (NH₄)₂RuCl₆ precipitate, filtering the H₂RuCl₆ solution to obtain a filter cake, washing the filter cake by an ethanol solution to remove the impurities and the muriatic acid on the filter cake, and drying the filter cake to obtain an (NH₄)₂RuCl₆ solid; and
6) reducing the (NH₄)₂RuCl₆ solid at a temperature of 650°C using a mixed gas of hydrogen and nitrogen to obtain metal ruthenium, the volume fraction of the hydrogen in the mixed gas being 15%, the weight of the metal ruthenium being measured to be 2.946 g.

In this embodiment, the recovering rate of the ruthenium is 98.2%.

### Example 4

A method for recovering ruthenium from waste catalyst of aluminum oxide loaded with ruthenium, the method comprising:
1) weighing 90 g of waste catalyst of aluminum oxide loaded with ruthenium (in which the weight percentage of the ruthenium is 5.0%) and putting the waste catalyst into a crucible, placing the crucible inside a muffle, purging the muffle with nitrogen, drying waste catalyst of aluminum oxide loaded with ruthenium loaded with ruthenium at 100-150°C in a nitrogen atmosphere for 1-2 hours, calcining the waste catalyst of aluminum oxide loaded with ruthenium at 300-500°C for 2-4 hours for removing the residual organic substance in the waste catalyst, cooling to room temperature to obtain 81.2 g black solid, and grinding the black solid into black solid powder;
2) placing 60 g of the obtained black powder inside a fluidized bed reactor, purging the fluidized bed reactor with nitrogen for 25 minutes and then purging the fluidized bed reactor with hydrogen , and reducing the black powder to obtain a powder comprising metal ruthenium at a temperature of 350°C at a pressure of 2.0 MPa for 3 hours;
3) purging the fluidized bed reactor with nitrogen for 35 minutes, and then introducing a mixed gas of oxygen and ozone to oxidize the powder comprising ruthenium for obtaining RuO₄ gas at a temperature of 600°C at a pressure of 2 MPa for 6 hours, in which the space rate of the mixed gas of oxygen and ozone is 4000 h⁻¹ and the volume fraction of the ozone in the mixed gas of oxygen and ozone is 5%;
4) introducing the RuO₄ gas into 6 mol/L hydrochloric solution, and completely dissolving the RuO₄ gas to obtain an H₃RuCl₆ solution;
5) slowly introducing 0.63 g (which is 1.2 times of the theoretical weight that is required for complete reaction) oxidant NaClO₃ powder into the H₃RuCl₆ solution, stirring the H₃RuCl₆ solution for 1.5 hours to completely oxidize the H₃RuCl₆ solution to generate H₂RuCl₆, introducing 7.94 g NH₄Cl (which is 2.5 times of the theoretical weight of the NH₄Cl that is required for complete reaction) into the H₂RuCl₆ solution, heating the H₂RuCl₆ solution to 70°C, stirring the H₂RuCl₆ solution for 1 hour at 400 r/min to obtain a (NH₄)₂RuCl₆ precipitate, filtering the H₂RuCl₆ solution to obtain a filter cake, washing the filter cake by an ethanol solution to remove the impurities and the muriatic acid on the filter cake, and drying the filter cake to obtain an (NH₄)₂RuCl₆ solid; and
6) reducing the (NH₄)₂RuCl₆ solid at a temperature of 800°C using a mixed gas of hydrogen and nitrogen to obtain metal ruthenium, the volume fraction of the hydrogen in the mixed gas being 15%, the weight of the metal ruthenium being measured to be 2.901 g.

In this embodiment, the recovering rate of the ruthenium is 96.7%.

## Claims

1. A method for recovering ruthenium from waste catalyst of aluminum oxide loaded with ruthenium, the method comprising:
1) drying waste catalyst of aluminum oxide loaded with ruthenium at 100-150°C in a nitrogen atmosphere for 1-2 hours, calcining the waste catalyst of aluminum oxide loaded with ruthenium at 300-500°C for 2-4 hours, cooling the waste catalyst of aluminum oxide loaded with ruthenium to room temperature, and grinding the waste catalyst of aluminum oxide loaded with ruthenium into black powder comprising ruthenium oxide;
2) placing the black powder inside a fluidized bed reactor, purging the fluidized bed reactor with nitrogen for 20-40 minutes and then purging the fluidized bed reactor with hydrogen, and reducing the black powder to obtain a powder comprising ruthenium at a temperature of 200-400°C at a pressure of 1-2 MPa for 2-3 hours;
3) purging the fluidized bed reactor with nitrogen for 20-40 minutes, and then introducing a mixed gas of oxygen and ozone to oxidize the powder comprising ruthenium for obtaining RuO₄ gas at a temperature of 500-750°C at a pressure of 1-2 MPa for 1-8 hours;
4) introducing the RuO₄ gas into a 3-8 mol/L hydrochloric solution, and completely dissolving the RuO₄ gas to obtain an H₃RuCl₆ solution;
5) slowly introducing excess oxidant into the H₃RuCl₆ solution, stirring the H₃RuCl₆ solution for 0.5-1.5 hours to completely oxidize the H₃RuCl₆ solution to generate H₂RuCl₆, introducing excess NH₄Cl into the H₂RuCl₆ solution, heating the H₂RuCl₆ solution to 60-90°C, stirring the H₂RuCl₆ solution for 1-3 hours, filtering the H₂RuCl₆ solution to obtain a filter cake, and washing the filter cake to obtain an (NH₄)₂RuCl₆ solid, wherein the oxidant is soluble chlorate; and
6) reducing the (NH₄)₂RuCl₆ solid at a temperature of 450-800°C using a mixed gas of hydrogen and nitrogen to obtain ruthenium, wherein a volume fraction of the hydrogen in the mixed gas is 1-15%.

2. The method of claim 1, wherein in step 3) the space rate of the mixed gas of oxygen and ozone is 1000-4000 h⁻¹.

3. The method of claim 1 or 2, wherein in step 3), the volume fraction of the ozone in the mixed gas of oxygen and ozone is 1-20%.

4. The method of claim 1 or 2, wherein in step 4) the concentration of the hydrochloric solution is 6 mol/L.

5. The method of claim 1 or 2, wherein in step 5) the weight of the NH₄Cl is 1.2-2.5 times of the theoretical weight of the NH₄Cl that is required to completely react with the H₂RuCl₆ solution.

6. The method of claim 1 or 2, wherein in step 5) the oxidant is one or more of the following: ammonium chlorate, potassium chlorate, sodium chlorate, and magnesium chlorate.

7. The method of claim 1 or 2, wherein in step 5) the filter cake is washed by an ethanol solution.

8. The method of claim 1 or 2, wherein in step 5) the H₂RuCl₆ solution is stirred at 100-400 r/min for 1-3 hours.

9. The method of claim 8, wherein in step 5) the H₂RuCl₆ solution is stirred at 200 r/min for 1.5-2.5 hours.

## Patentansprüche

1. Verfahren zum Rückgewinnen von Ruthenium aus Abfallkatalysator aus Aluminiumoxid, das mit Ruthenium beladen ist, wobei das Verfahren umfasst:
1) Trocknen von Abfallkatalysator aus Aluminiumoxid, das mit Ruthenium beladen ist, für 1 bis 2 Stunden bei 100 bis 150 °C in einer Stickstoffatmosphäre, Kalzinieren des Abfallkatalysators aus Aluminiumoxid, das mit Ruthenium beladen ist, während 2 bis 4 Stunden bei 300 bis 500 °C, Kühlen des Abfallkatalysators aus Aluminiumoxid, das mit Ruthenium beladen ist, auf Zimmertemperatur und Zerkleinern des Abfallkatalysators aus Aluminiumoxid, das mit Ruthenium beladen ist, zu schwarzem Pulver, das Rutheniumoxid umfasst;
2) Platzieren des schwarzen Pulvers im Inneren eines Wirbelschichtreaktors, Spülen des Wirbelschichtreaktors für 20 bis 40 Minuten mit Stickstoff und dann Spülen des Wirbelschichtreaktors mit Wasserstoff und Reduzieren des schwarzen Pulvers, um während 2 bis 3 Stunden bei einer Temperatur von 200 bis 400 °C bei einem Druck von 1 bis 2 MPa ein Pulver zu gewinnen, das Ruthenium umfasst;
3) Spülen des Wirbelschichtreaktors für 20 bis 40 Minuten mit Stickstoff und dann Einleiten eines Mischgases aus Sauerstoff und Ozon, um das Pulver, das Ruthenium umfasst, zu oxidieren, um während 1 bis 8 Stunden bei einer Temperatur von 500 bis 750 °C, bei einem Druck von 1 bis 2 MPa, RuO₄-Gas zu gewinnen;
4) Einleiten des RuO₄-Gases in eine Chlorwasserstofflösung von 3 bis 8 mol/l und vollständiges Lösen des RuO₄-Gases, um eine H₃RuCl₆-Lösung zu gewinnen;
5) langsames Einleiten von überschüssigem Oxidationsmittel in die H₃RuCl₆-Lösung, Rühren der H₃RuCl₆-Lösung für 0,5 bis 1,5 Stunden, um die H₃RuCl₆-Lösung vollständig zu oxidieren, um H₂RuCl₆ zu erzeugen, Einleiten von überschüssigem NH₄ Cl in die H₂RuCl₆-Lösung, Erhitzen der H₂RuCl₆-Lösung auf 60 bis 90 °C, Rühren der H₂RuCl₆-Lösung für 1 bis 3 Stunden, Filtrieren der H₂RuCl₆-Lösung, um einen Filterkuchen zu gewinnen, und Waschen des Filterkuchens, um einen (NH₄)₂RuCl₆-Feststoff zu gewinnen, wobei das Oxidationsmittel lösliches Chlorat ist; und
6) Reduzieren des (NH₄)₂RuCl₆-Feststoffes bei einer Temperatur von 450 bis 800 °C unter Benutzung eines Mischgases aus Wasserstoff und Stickstoff, um Ruthenium zu gewinnen, wobei eine Volumenfraktion des Wasserstoffs in dem Mischgas 1 bis 15 % beträgt.

2. Verfahren nach Anspruch 1, wobei in Schritt 3 die Raumgeschwindigkeit des Mischgases aus Sauerstoff und Ozon 1.000 bis 4.000 h⁻¹ beträgt.

3. Verfahren nach Anspruch 1 oder 2, wobei in Schritt 3) der Volumenanteil des Ozons in dem Mischgas aus Sauerstoff und Ozon 1 bis 20 % beträgt.

4. Verfahren nach Anspruch 1 oder 2, wobei in Schritt 4) die Konzentration der Chlorwasserstofflösung 6 mol/l beträgt.

5. Verfahren nach Anspruch 1 oder 2, wobei in Schritt 5) das Gewicht des NH₄Cl das 1,2- bis 2,5-fache des theoretischen Gewichts des NH₄Cl beträgt, das erforderlich ist, um mit der H₂RuCl₆-Lösung vollständig zu reagieren.

6. Verfahren nach Anspruch 1 oder 2, wobei in Schritt 5) das Oxidationsmittel eins oder mehrere der folgenden ist: Ammoniumchlorat, Kaliumchlorat, Natriumchlorat und Magnesiumchlorat.

7. Verfahren nach Anspruch 1 oder 2, wobei in Schritt 5) der Filterkuchen mittels einer Ethanollösung gewaschen wird.

8. Verfahren nach Anspruch 1 oder 2, wobei in Schritt 5) die H₂RuCl₆-Lösung für 1 bis 3 Stunden mit 100 bis 400 U/min gerührt wird.

9. Verfahren nach Anspruch 8, wobei in Schritt 5) die H₂RuCl₆-Lösung für 1,5 bis 2,5 Stunden mit 200 U/min gerührt wird.

## Revendications

1. Procédé de récupération de ruthénium à partir d'un catalyseur usagé d'oxyde d'aluminium chargé avec du ruthénium, le procédé consistant à :
1) sécher le catalyseur usagé d'oxyde d'aluminium chargé avec du ruthénium entre 100 et 150 °C dans une atmosphère d'azote pendant 1 à 2 heures, calciner le catalyseur usagé d'oxyde d'aluminium chargé avec du ruthénium entre 300 et 500 °C pendant 2 à 4 heures, refroidir le catalyseur usagé d'oxyde d'aluminium chargé avec du ruthénium à température ambiante, et broyer le catalyseur usagé d'oxyde d'aluminium chargé avec du ruthénium en une poudre noire comprenant de l'oxyde de ruthénium ;
2) placer la poudre noire à l'intérieur d'un réacteur à lit fluidisé, purgé le réacteur à lit fluidisé avec de l'azote pendant 20 à 40 minutes et ensuite purger le réacteur à lit fluidisé avec de l'hydrogène, et réduire la poudre noire pour obtenir une poudre comprenant le ruthénium à une température comprise entre 200 et 400 °C à une pression comprise entre 1 et 2 MPa pendant 2 à 3 heures ;
3) purger le réacteur à lit fluidisé avec de l'azote pendant 20 à 40 minutes, et ensuite introduire un mélange gazeux composé d'oxygène et d'ozone pour oxyder la poudre comprenant le ruthénium pour obtenir le RuO₄ gazeux à une température comprise entre 500 et 750 °C à une pression comprise entre 1 et 2 MPa pendant 1 à 8 heures ;
4) introduire le RuO₄ gazeux dans une solution chlorhydrique de concentration comprise entre 3 et 8 mol/L, et dissoudre complètement le RuO₄ gazeux pour obtenir une solution de H₃RuCl₆ ;
5) introduire lentement un oxydant en excès dans la solution de H₃RuCl₆, mélanger la solution de H₃RuCl₆ pendant 0,5 à 1,5 heures pour oxyder complètement la solution de H₃RuCl₆ pour générer H₂RuCl₆, introduire un excès de NH₄Cl dans la solution de H₂RuCl₆, chauffer la solution de H₂RuCl₆ entre 60 et 90 °C, mélanger la solution de H₂RuCl₆ pendant 1 à 3 heures, filtrer la solution de H₂RuCl₆ pour obtenir un gâteau de filtre, et laver le gâteau de filtre pour obtenir un (NH₄)₂RuCl₆ solide, dans lequel l'agent oxydant est le chlorate soluble ; et
6) réduire le (NH₄)₂RuCl₆ solide à une température comprise entre 450 et 800 °C en utilisant un mélange gazeux composé d'hydrogène et d'azote pour obtenir le ruthénium, dans lequel une fraction volumique de l'hydrogène dans le mélange gazeux est comprise entre 1 et 15 %.

2. Procédé selon la revendication 1, dans lequel dans l'étape 3) le taux d'espace du mélange gazeux composé d'oxygène et d'ozone est compris entre 1000 et 4000 h⁻¹.

3. Procédé selon la revendication 1 ou la revendication 2, dans lequel dans l'étape 3), la fraction volumique de l'ozone dans le mélange gazeux composé d'oxygène et d'ozone est compris entre 1 et 20 %.

4. Procédé selon la revendication 1 ou la revendication 2, dans lequel dans l'étape 4) la concentration de la solution chlorhydrique est de 6 mol/L.

5. Procédé selon la revendication 1 ou la revendication 2, dans lequel dans l'étape 5) le poids de NH₄Cl est compris entre 1,2 et 2,5 fois le poids théorique de NH₄Cl qui est requis pour réagir complètement avec la solution de H₂RuCl₆.

6. Procédé selon la revendication 1 ou la revendication 2, dans lequel dans l'étape 5) l'agent oxydant est un ou plus des composés suivants : le chlorate d'ammonium, le chlorate de potassium, le chlorate de sodium, et le chlorate de magnésium.

7. Procédé selon la revendication 1 ou la revendication 2, dans lequel dans l'étape 5) le gâteau de filtre est lavé par une solution d'éthanol.

8. Procédé selon la revendication 1 ou la revendication 2, dans lequel dans l'étape 5) la solution de H₂RuCl₆ est mélangée entre 100 et 400 r/min pendant 1 à 3 heures.

9. Procédé selon la revendication 8, dans lequel dans l'étape 5) la solution de H₂RuCl₆ est mélangée à 200 r/min pendant 1,5 à 2,5 heures.
